# EUROPÄISCHE PATENTSCHRIFT

(11) **EP 0 958 995 B1**
(45) Veröffentlichungstag und Bekanntmachung des Hinweises auf die Patenterteilung: **05.03.2003**
(21) Anmeldenummer: 99108881.6
(22) Anmeldetag: 05.05.1999
(51) Int. Cl.: B62D 33/04, B62D 29/04

(54) **Wandelement für einen Fahrzeugaufbau und Verfahren zur Herstellung eines solchen Wandelements**
Wall element for the body structure of a vehicle and fabrication process of such a wall element
Elément de paroi de carrosserie pour véhicule et procédé de fabrication d'un élément pareil

(30) Priorität: 22.05.1998 DE 19822884
(43) Veröffentlichungstag der Anmeldung: 24.11.1999
(73) Patentinhaber: Kiesling, Peter, 89081 Ulm (DE)
(72) Erfinder: Kiesling, Peter, 89081 Ulm (DE)
(74) Vertreter: Weber, Gerhard, Dipl.-Phys.

(56) Entgegenhaltungen:
- CH-A- 469 594
- DE-A- 2 848 774
- DE-C- 522 732
- GB-A- 2 223 712

## Beschreibung

Die Erfindung betrifft ein Wandelement für einen Fahrzeugaufbau und ein Verfahren zur Herstellung eines solchen Wandelements.

Zur rationellen Fertigung von geschlossenen Fahrzeugaufbauten werden großflächige Wandelemente vorgefertigt und in Rahmen integriert. Aus der DE 28 48 774 A1 ist ein solches Wandelement bekannt, bei welchem eine Außenfläche durch Plattensegmente mit abgewinkelten Randstreifen gebildet ist. Kupplungsprofile umgreifen die abgewinkelten Randstreifen und sind mit inneren Flächen der Plattensegmente verklebt. Die Kupplungsprofile sind seitlich abgewinkelt und reichen als Versteifungselemente durch den Wandraum zur gegenüberliegenden Deckplatte, wo sie direkt oder über zusätzliche Versteifungsträger befestigt sind.

Insbesondere für Kühlfahrzeuge sind Wandelemente gebräuchlich, bei denen gegenüberliegende Deckflächen durch einen Kern aus ausgehärtetem Schaumstoff als wärmeisolierendem Material miteinander verbunden sind. In der DE-OS 1914 997 ist ein solches ausgeschäumtes Wandelement beschrieben, welches aus mehreren Wandteilen aufgebaut ist. Jedes Wandteil weist Seitenkanten mit einer Nut bzw. einer Feder auf, und benachbarte Wandteile sind mit Nut und Feder unter Zwischenfügung einer gehärteten Matte aus glasfaserverstärktem Kunststoff miteinander verbunden. Aus der EP 0 607 575 A1 ist ein Bausatz für einen Kofferaufbau eines Fahrzeugs bekannt, bei welchem unter anderem Wandelemente zum Einsatz Kommen, die aus Wandteilen mit einem Kunststoffkern und beidseitigen Deckschichten aufgebaut sind, wobei andeinandergrenzende Teile wiederum mit Nut und Feder versehen sind, die federnd ineinanderrasten.

Die gattungsgemäße GB 22 23 712 A beschreibt ein isolierendes Wandelement für einen Kühlfahrzeugaufbau, welches zwischen zwei Deckplatten einen Kern aus festem Schaumstoff enthält. Eine der Deckplatten ist aus Plattensegmenten mit abgewinkelten Randabschnitten, die aneinanderstoßen und durch ein Klammerprofil umgriffen sind, zusammengesetzt.

Der Erfindung liegt die Aufgabe zugrunde, ein vorteilhaftes, insbesondere stabiles Wandelement für einen Fahrzeugaufbau und ein Verfahren zur Herstellung eines solchen Wandelements anzugeben.

Erfindungsgemäße Lösungen dieser Aufgabe sind in den unabhängigen Ansprüchen angegeben. Die Unteransprüche enthalten vorteilhafte Ausgestaltungen und Weiterbildungen der Erfindung.

Das erfindungsgemäße Wandelement zeigt durch den Hohlsteg des Stangenprofils und die abgewinkelten Ränder der Plattensegmente eine hohe Steifigkeit gegen Durchbiegung entlang der Stoßkanten benachbarter Plattensegmente und durch die Seitenfahnen eine hohe Widerstandskraft gegen Verschieben benachbarter Plattensegmente entlang der Stoßkanten nach Art einer Scherung des aus mehreren Segmenten aufgebauten Wandelements. Durch die Verklebung wird eine hohe spielfreie Haltekraft gegenüberstehender Flächen von Spangenprofil und Plattensegment erreicht, ohne das Materialgefüge zu stören. Die Verklebung ist auch fertigungstechnisch vorteilhaft. Vorzugsweise wird für die Verklebung ein Zweikomponentenkleber verwandt.

Die Spangenprofile weisen vorteilhafterweise im wesentlichen parallele Innenflächen des Hohlstegs auf, die mit den abgewinkelten Rändern der Plattensegmente einen Verbund von insgesamt vier parallelen Blechlagen bilden, der eine hohe Stabilität gegen vertikale Durchbiegung in der Ebene der Flächen aufweist.

Durch die innenliegende Position der Spangenprofile brauchen diese keine besondere optische Gestaltung einer Oberfläche aufweisen und sind daher sowohl in preislicher Hinsicht günstig als auch in der Handhabung im Fertigungsprozeß unkritisch. Die äußere sichtbare Oberfläche des Wandelements ist allein durch die Oberfläche der Plattensegmente bestimmt, die beim Herstellungsprozeß keiner besonderen Beanspruchung unterliegt. Die Plattensegmente können durch die einfache Form einer ebenen Deckfläche mit nach innen abgewinkelten Rändern vorteilhafterweise mit geringem Aufwand aus ebenem Ausgangsmaterial, beispielsweise aus Blech aus Metall oder glasfaserverstärktem Kunststoff hergestellt werden. Durch die Umbiegung der Ränder der Plattensegmente sind auch die am ehesten korrosionsanfälligen Kanten der die Plattensegmente bildenden Bleche zusätzlich geschützt und im Korrosionsfall nicht optisch beeinträchtigend.

Bei der Verklebung des Spangenprofils mit den Plattensegmenten an deren Stoßkanten wird einerseits ein flächiger Kontakt angestrebt, andererseits soll aber die Verklebung auch unproblematisch in der Fertigungshandhabung sein. Verminderte Haltekräfte zwischen sich gegenüberstehenden Flächen können beispielsweise auftreten, wenn beim Aufschieben des Spangenprofils auf die aneinanderstoßenden abgewinkelten Ränder der Plattensegmente durch anliegende Kanten Klebstoff von einer Fläche abgestreift wird oder wenn durch hohen Druck Klebstoff zwischen zwei gegeneinandergepreßten Flächen seitlich ausweicht und die Klebstoffschicht unterbrochen oder zu dünn wird. Um eine zuverlässige Verklebung zu gewährleisten sind daher neben der flächigen Verklebung gezielt Hohlräume vorgesehen, in welchen auch bei im Einzelfall ungünstigen Umständen bei der Fertigung zuverlässig Klebstoff vorhanden ist und eine Verbindung hoher Haltekraft sicherstellt.

Zur Ausbildung solcher Hohlräume ist insbesondere vorgesehen, die Seitenfahnen der Spangenprofile mit von der Planfläche der Plattensegmente weggewölbten Abschnitten zu versehen. Solche weggewölbten Abschnitte sind vorzugsweise als parallel zur Profillängsrichtung verlaufende Sicken oder Nuten oder dgl. ausgebildet, die von der Innenfläche der Plattensegmente wegweisen und flache, mit Klebstoff gefüllte Kanäle in Profillängsrichtung bilden. Eine zuverlässige Verklebung ergibt sich auch im Scheitel des Hohlstegs des Spangenprofils, in welchem soviel Klebstoff vorgegeben wird, daß dieser nicht nur den Scheitel des Hohlstegs mit den Endkanten der umgebogenen Ränder der Plattensegmente verbinden, sonder auch ein Stück weit in die Stoßfuge zwischen den andeinanderstoßenden Rändern eindringen kann. Ein mit Klebstoff gefüllter Hohlraum kann schließlich noch vorteilhaft im Bereich der inneren Knicklinien der Ränder der Plattensegmente gegen die Deckfläche und dem Übergang vom Hohlsteg zu den Seitenfahnen des Spangenprofils gebildet sein. Die Spangenprofile können vorteilhafterweise aus einem Blech durch Biegen, Rollen oder dgl. hergestellt sein und können nach Materialstärke und Materialzusammensetzung vorzugsweise eine wesentlich höhere Festigkeit aufweisen, insbesondere eine wesentlich höhere Biegesteifigkeit auf als das Material der Plattensegmente. Die Spangenprofile können insbesondere aus einem Edelstahlblech bestehen. Dadurch kann sichergestellt werden, daß die Spange unter Belastung nicht am Blechstoß reißt.

Für die Fertigstellung des Wandelements werden zwei aus mehreren Platten-segmenten aufgebaute Deckplatten spiegelbildlich im wesentlichen gleichen Umrisses beabstandet einander gegenüberstehend angeordnet und der Zwischenraum zwischen beiden Deckplatten wird mit einem aushärtenden Kunststoff ausgeschäumt. Zum Auffangen des beim Ausschäumen auftretenden Drucks sind die Deckplatten in einer Plattenpresse stabil abgestützt.

Die vorstehend und in den Patentansprüchen genannten Maßnahmen und Merkmale sind sowohl einzeln als auch in verschiedenen Kombinatinen vorteilhaft zur Lösung der gestellten Aufgabe geeignet.

Die Erfindung ist nachfolgend anhand bevorzugter Ausführungsbeispiele unter Bezugnahme auf die Abbildungen noch eingehend veranschaulicht. Dabei zeigt:
- Fig. 1: einen Querschnitt durch ein Plattensegment
- Fig. 2: aneinanderstoßende Plattensegmente und ein Spangenprofil
- Fig. 3: die Elemente der Fig. 2 nach der Verklebung
- Fig. 4: eine erste Ausformung eines Spangenprofils
- Fig. 5: weitere Ausformungen von Spangenprofilen
- Fig. 6: einen Aufbau eines Wandelements
- Fig. 7: einen anderen Aufbau eines Wandelements

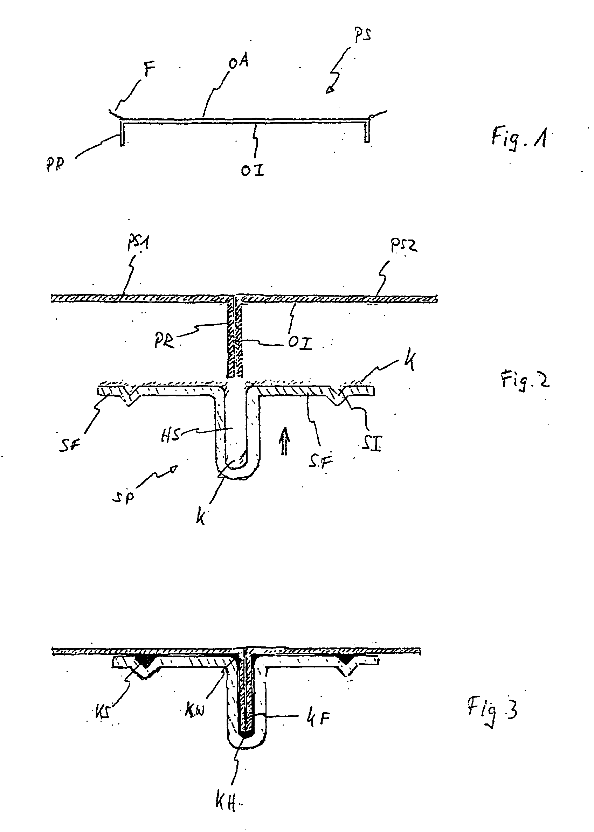

Das in Fig. 1 im Querschnitt skizzierte Plattensegment PS ist aus einem flachen Ausgangsmaterial, insbesondere einem Rollenmaterial durch Abwinkeln von Randabschnitten PR hergestellt und erstreckt sich mit gleichbleibendem Querschnitt senkrecht zur Zeichenebene der Fig. 1. Ein solches Plattensegment ist in einem fertigen Wandaufbau typischerweise mit seiner Längsrichtung vertikal angeordnet.

Das Ausgangsmaterial für das Plattensegment ist beispielsweise ein metallisches Blech oder eine glasfaserverstärkte Platte von beispielsweise 0,5 - 2 mm Dicke. Eine Außenoberfläche OA des Plattensegments ist vorzugsweise mit einer Beschichtung versehen, welche Anforderungen nach optischem Erscheinungsbild, Kratzfestigkeit, Witterungsbeständigkeit, Korrosionsschutz, Wärmereflexion usw. erfüllen kann, versehen. Die innere Oberfläche OI des Plattensegments kann je nach Basismaterial des Plattensegments mit einer korrosionsschützenden Oberflächenbehandlung und/oder mit einer Haftvermittlungsschicht für den später in den Wandraum einzubringenden Isolierschaum versehen sein.

Die Plattensegmente werden in der in Fig. 2 für zwei Plattensegmente PS1 und PS2 skizzierten Art mit ihren umgebogenen Randabschnitten PR und fluchtenden äußeren Oberflächen aneinander gestoßen. Ein Spangenprofil SP mit einem Hohlsteg HS und Seitenfahnen SF wird zum Aufstecken auf die aneinanderliegenden abgewinkelten Abschnitte PR vorbereitet, indem Klebstoff K in den Hohlsteg HS und auf die den Plattensegmenten zugewandte Fläche der Seitenfahnen SF aufgebracht wird. Die Spangenprofile SP erstrecken sich wie die Plattensegmente PS1, PS2 mit ihrer Längsrichtung senkrecht zur Zeichenebene der Fig. 2 vorzugsweise einstückig über die gesamte Länge der Plattensegmente senkrecht zur Zeichenebene. Die genaue Ausformung der Spangenprofile SP ist in verschiedenen Varianten weiter unten noch erläutert. In dem Beispiel in der Fig. 2 sind Spangenprofile SP mit Sicken SI in den Seitenfahnen SF dargestellt. Die Blechstärke der Spangenprofile kann vorzugsweise zwischen dem 0,5-fachen und dem 4-fachen der Blechstärke der Plattensegmente liegen.

Das Spangenprofil SP wird in der in Fig. 2 durch einen Pfeil skizzierten Richtung mit dem Hohlsteg HS über die zusammengestossenen abgewinkelten Ränder PR der Plattensegmente PS1 und PS2 geschoben und mit den Seitenfahnen SF gegen die innere Oberfläche OI der Plattensegmente gepreßt: Beim Aufschieben des Spangenprofils SP auf die abgewinkelten Ränder PR kann an den Seitenwänden des Hohlstegs befindliches Klebematerial K von den Seitenwänden abgestreift werden, so daß für diese gegenüberliegenden Flächenbereiche,keine feste Kleberhaftung gewährleistet werden kann. Der Abstreifeffekt kann jedoch teilweise kompensiert werden, indem Klebematerial K in solchem Überschuß in den Hohlsteg eingebracht wird, daß bei vollständig aufgestecktem Spangenprofil zuvor evtl. abgestreiftes Klebematerial wieder in den Zwischenraum zwischen Innenwandung des Hohlstegs und Innenfläche der abgewinkelten Randabschnitte PR gedrängt wird. Durch den Kleberüberschuß im Hohlsteg HS wird beim Aufstecken des Spangenprofils günstigerweise auch Klebematerial zwischen die eng beabstandeten Außenoberflächen der abgewinkelten Randabschnitte PR gedrängt und bildet dort eine abdichtende Klebefuge KF wie in Fig. 3 eingezeichnet. Eine zuverlässige Verklebung ergibt sich auf jeden Fall mit den endständigen Kanten der abgewinkelten Ränder PR als ein sich in Längsrichtung des Spangenprofils erstreckender Verklebungs-streifen KH im Scheitel des Hohlstegs HS. Die Verklebung zwischen den Innenoberflächen der abgewinkelten Randabschnitte und den Innenflächen des Hohlstegs des Spangenprofils sowie die Klebefuge KF zwischen den Außenoberflächen der abgewinkelten Abschnitte kann wie beschrieben nicht ohne zusätzlichen Herstellungsaufwand über die gesamte Längsrichtung gewährleistet werden, ist jedoch erfahrungsgemäß über weite Abschnitte der Längsrichtung gegeben.

Zwischen den Innenflächen der Plattensegmente PS1, PS2 und den diesen zugewandten Flächen der Seitenfahnen SF des Spangenprofils kann, wie gleichfalls bereits beschrieben, bei der Druckeinwirkung der Kleber K unter Umständen soweit verdrängt werden, daß die verbleibende Kleberschicht sehr dünn oder unterbrochen wird und die maximal mögliche Haltekraft in solchen Bereichen nicht gegeben ist. Um bei einfacher Handhabung im Herstellungsprozeß dennoch eine zuverlässige Verklebung mit hoher Haltekraft zu gewährleisten, können die den Plattensegmenten zugewandte Fläche der Seitenfahnen SF mit von den Plattensegmenten weggerichteten Auswölbungen beispielsweise in Form der Längssicken SI versehen werden. Bei einer evtl. Verdrängung von Kleber beim Andrücken der Spangenprofile an die Innenflächen der Plattensegmente ist in diesen Auswölbungen der Verbleib oder die Ansammlung von Klebstoff sichergestellt und eine ausreichende Haltekraft des Spangenprofils auf der Innenfläche der Plattensegmente gewährleistet. Die Auswölbungen können dann flache mit Klebstoff gefüllte Längskanäle parallel zur Längsrichtung der Spangenprofile bilden. Die Auswölbungen sind nicht notwendigerweise in Längsrichtung erstreckt, jedoch aus Gründen der vereinfachten Herstellung der Stangenprofile als Längsprofile mit gleichbleibendem Querschnitt als in Längsrichtung gleichbleibende Auswölbungen gestaltet.

Positionen mit gewährleisteter Klebstoffausfüllungen in eine hohe Haltekraft gewährleistender Dicke können auch an den Knickstellen der Plattensegmente und des Spangenprofils gegeben sein, wenn beispielsweise der Biegeradius an der inneren Knicklinie der Plattensegmente beim Übergang von der ebenen Deckfläche zu den abgewinkelten Randbereiche wesentlich geringer ist als der äußere Biegeradius des Spangenprofils beim Übergang von den Seitenwänden des Hohlstegs zu den Seitenfahnen. In dem Winkelbereich bildet sich dann ein mit Klebstoff gefüllter Längskanal KW aus, welcher zuverlässig eine hohe Haltekraft aufbringen kann und sowohl in Korrespondenz mit den Klebestellen KS als auch mit den Klebestellen KH eine günstige Position in Querschnitt der verklebten Anordnung einnimmt.

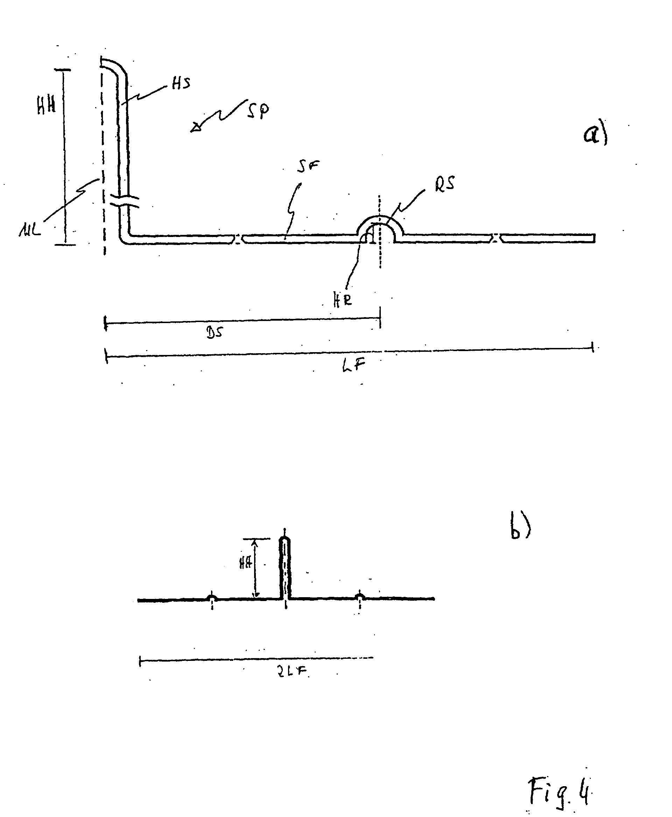

In Fig. 4 ist in zwei verschiedenen Abbildungsmaßstäben eine Ausführungsform für einen Querschnitt eines Spangenprofils SP skizziert, wobei in der maßstabsgrößeren Skizze nach Fig. 4a lediglich eine Hälfte des bezüglich einer Mittellinie ML symmetrischen Spangenprofils dargestellt ist. Der Hohlsteg HS weist im wesentlichen parallele Seitenwände auf. Die innere Höhe HH des Hohlstegs von der Klebefläche der Seitenfahnen bis zum Scheitel des Hohlstegs liegt beispielsweise im Bereich von 1 mm bis 20 mm oder zwischen 1 % und 60 %, vorzugsweise zwischen 2% und 20% der Wandstärke des herzustellenden Wandelements. Die in den Seitenfahnen SF eingebrachte Längssikke ist im skizzierten Beispielsfall als Halbrundsicke RS ausgeführt, mit einer Sickentiefe HR im Bereich von 0,1 mm bis 2 mm. Der Abstand DS der Sickenmitte von der Mittellinie ML ist mit DS bezeichnet und liegt beispielsweise im Bereich zwischen 3 mm und 30 mm bei einer Gesamtlänge LF der Seitenfahnen FF bezogen auf die Mittellinie ML im Bereich von 5 mm bis 50 mm. Die Bereichsangaben sind lediglich als bevorzugte anschauliche Beispiele zu verstehen, die je nach Dimensionen des Wandaufbaus und der einzelnen Plattensegmente noch variieren können. In Fig. 4b ist eine Gesamtansicht des Querschnitts des Spangenprofils in reduziertem Maßstab gegeben.

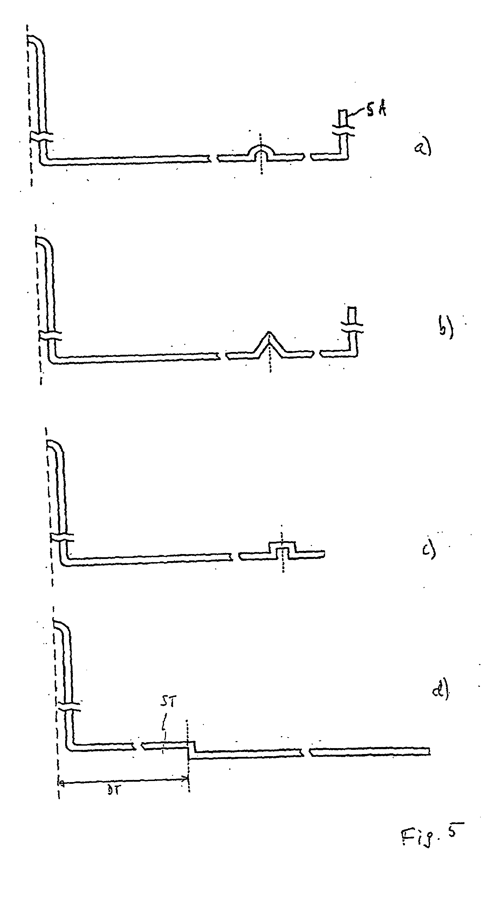

In Fig. 5 sind verschiedene Ausführungsbeispiele für vorteilhafte Querschnittsformen des Spangenprofils gegeben. Bei dem Beispiel nach Fig. 5a zeigt das Spangenprofil im Querschnitt noch eine Abwinkelung der äußeren Ränder der Seitenfahnen in Form von Stegen SA, welche eine zusätzliche Versteifungsfunktion gegen eine vertikale Durchbiegung des zusammengesetzten Wandelements besitzen. Die Fig. 5b zeigt einen Profilquerschnitt, bei welchem die Längssicke einen ungefähr dreieckigen Querschnitt aufweist und wiederum die Ränder der Seitenfahnen nach innen abgewinkelt sind. Bei dem in Fig. 5c skizzierten Beispiel hat die Längssicke einen annähernd rechtwinkligen Querschnitt. In Fig. 5d ist anstelle einer von der Mittelebene des Spangenquerschnitts beabstandeten Sicke eine Profilstufe ST vorgesehen, welche sich von der Mittelebene ausgehend über eine Distanz DT nach außen erstreckt. Für den Querschnitt des Spangenprofils sind noch eine größere Zahl weiterer Formgebungen vorstellbar, insbesondere auch Kombinationen der skizzierten Ausführungen und/oder Ausführungen mit mehreren parallelen Sicken innerhalb einer Seitenfahne, nicht in Längsrichtung erstreckten Auswölbungen etc. die dem Fachmann an sich geläufig sind und je nach Anwendungsfall und Herstellungsverfahren für die Spangenprofile vorteilhaft sein können.

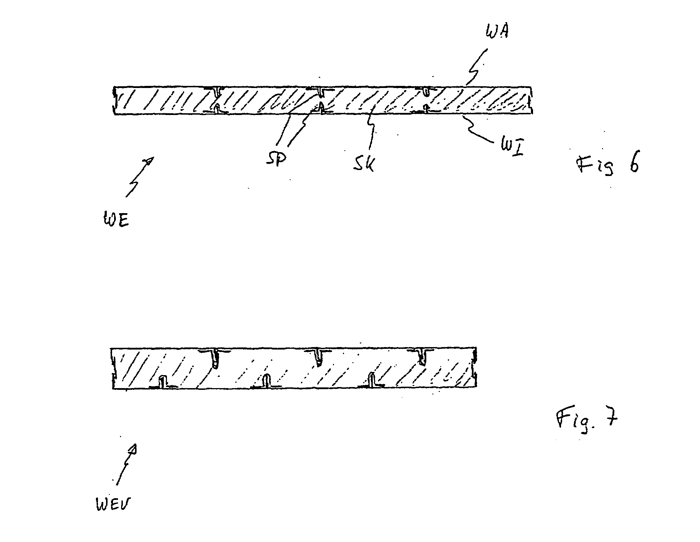

Die Fig. 6 zeigt einen Aufbau eines Wandelements WE, welches im wesentlichen aus einer äußeren Deckplatte WA und einer inneren Deckplatte Wl sowie einem dazwischenliegenden Isolierkern SK aus Hartschaum besteht. Die Deckplatten WA und WI sind ihrerseits aus einer Mehrzahl von aneinandergestossenen und in der beschriebenen Art über Spangenprofile SP verbundenen Plattensegmenten aufgebaut. Zur Herstellung eines solchen Wandelements werden die Deckplatten WA und Wl in der in Fig. 1 bis Fig. 3 skizzierten Weise separat hergestellt und einander beabstandet gegenüberstehend in eine Plattenpresse eingelegt. Der Zwischenraum zwischen den Deckplatten WA und Wl wird mit einem aushärtenden Kunststoffschaum ausgefüllt, wobei die Plattenpresse den beim Ausschäumen auftretenden Druck abfängt und die Deckplatten WA und WI in definiertem Abstand hält. Abweichend von der in Fig. 6 skizzierten Ausführung kann auch eine der beiden Deckplatten WE oder WA anders aufgebaut, insbesondere als einstückige Platte ausgeführt sein. Die Segmente einer Deckplatte sind nicht notwendigerweise gleich breit.

Während bei der Skizze nach Fig. 6 die Stoßfugen der Plattensegmente von äußerer Deckplatte WA und innerer Deckplatte WI einander direkt gegenüberliegen, ist in dem Beispiel nach Fig. 7 ein Querschnitt durch ein Wandelement WEV skizziert, bei welchem die Stoßfugen aneinandergrenzender Plattensegmente für die äußere Deckplatte WA und die innere Deckplatte WI alternierend auf Lücke versetzt positioniert sind. Die bei der Ausführung nach Fig. 6 auf die Positionen der jeweils direkt gegenüberliegenden Stoßfugen konzentrierte Aussteifung des Wandelements gegen vertikale Durchbiegung ist bei der Anordnung nach Fig. 7 über die Breite des Wandelements auf die alternierenden Positionen der Spangenprofile verteilt. Die Wärmebrückenbildung durch direkt gegenüberstehende Spangenprofile nach Fig. 6 ist bei der Anordnung mit alternierender Positionierung der Spangenprofile nach Fig. 7 verringert. Die Höhe des Hohlstegs der Spangenprofile kann bei der Ausführungsform nach Fig. 7 auch in der Größenordnung der halben Wandstärke des Wandelements oder darüber liegen. Bei der Ausführung nach Fig. 7 sind nicht alle Plattensegmente von einheitlicher Breite, sondern es sind auf jeden Fall Randsegmente WR mit abweichender Segmentbreite zu berücksichtigen.

Die Erfindung ist nicht auf die beschriebenen Ausführungsbeispiele beschränkt, sondern im Rahmen fachmännischen Könnens in mancherlei Weise abwandelbar. Insbesondere können die Sicken in den Seitenfahnen der Spangenprofile auf vielerlei Weise, beispielsweise als Rillen geformt sein, oder die Seitenfahnen können ebene Klebeflächen aufweisen. Die umgebogenen Ränder aneinanderstoßender Plattensegmente können an den einander zugewandten Flächen auch flächig verklebt sein, wodurch Zugkräften, die zu einer Aufbiegung des Spangenprofils führen könnten, entgegengewirkt wird.

## Patentansprüche

1. Wandelement für einen Fahrzeugaufbau mit einem Kern (SK) aus festem Schaumstoff, mit den Kern (SK) beidseitig begrenzenden Deckplatten (WI, WA), von denen eine oder beide in mehrere entlang von Stoßkanten aneinandergrenzende Plattensegmente (PS1, PS2) unterteilt sind, wobei die Ränder der Plattensegmente (PS1,PS2) an den Stoßkanten nach innen abgewinkelt sind und die abgewinkelten Abschnitte (PR) benachbarter Plattensegmente (PS1, PS2) aneinander stoßen, und mit Spangenprofilen (SP), die einen Hohlsteg (HS) aufweisen, welcher aneinanderstoßende abgewinkelte Abschnitte (PR) umgreift, **dadurch gekennzeichnet, dass** die Spangenprofile (SP) von dem Hohlsteg (HS) in einer zur Fläche der Deckplatte parallelen Ebene abstehende Seitenfahnen (SF) aufweisen, dass die Spangenprohle (SP) entlang der Stoßkanten innenliegend über den Hohlsteg (HS) mit den abgewinkelten Abschnitten (PR) der Plattensegmenten (PS1, PS2) und über die Seitenfahnen (SF) mit inneren Planflächen (OI) der Plattensegmente (PS1, PS2) und zusätzlich die aneinanderstoßenden abgewinkelten Ränder (PR) aneinandergrenzender Plattensegmente (PS1, PS2) miteinander verklebt sind.

2. Wandelement nach Anspruch 1, **dadurch gekennzeichnet, daß** die Seitenfahnen (SF) von der inneren Planfläche (OI) de Plattensegmente (PS1, PS2) weggewölbte Abschnitte (SI), insbesondere in Form von Sicken, aufweisen.

3. Wandelement nach Anspruch 2, **dadurch gekennzeichnet, daß** die Tiefe der weggewölbten Abschnitte (SI) zwischen 0,05 und 5 mm, insbesondere zwischen 0,1 mm und 2 mm, liegt.

4. Wandelement nach Anspruch 2 oder 3, **dadurch gekennzeichnet, daß** der Raum zwischen den weggewölbten Abschnitten (SI) und den inneren Planflächen (OI) der Plattensegmente (PS1, PS2) Klebstoff enthält.

5. Wandelement nach einem der Ansprüche 1 bis 4, **dadurch gekennzeichnet, daß** die Spangenprofile aus einem Blech gebogen sind.

6. Wandelement nach einem der Ansprüche 1 bis 5, **dadurch gekennzeichnet, daß** die Spangenprofile aus höherfestem Material als die Plattensegmente bestehen.

7. Verfahren zur Herstellung eines Wandelements für einen Fahrzeugaufbau, insbesondere nach Anspruch 1, bei welchem
- Plattensegmente, die von einer Planfläche nach einer Innenseite abgewinkelte Randabschnitte aufweisen, mit den Randabschnitten aneinandergestoßen werden,
- Spangenprofile, die einen Hohlsteg und von diesem seitlich wegführende Seitenfahnen aufweisen, unter Zwischenfügen von Klebematerial mit dem Hohlsteg auf die abgewinkelten aneinandergestoßenen Abschnitte aufgesteckt und die Seitenfahnen an die inneren Planflächen der Plattensegmente angeklebt werden, wobei zusätzlich Klebstoff in solchem Überschuß in den Hohlsteg gegeben wird, daß beim Aufstecken des Spangenprofils auf die abgewinkelten aneinandergestossenen Randabschnitte Klebstoff in die Stoßfuge zwischen den Randabschnitten eindringt
- zwei aus mehreren Plattensegmenten bestehende Deckplatten oder eine solche Deckplatte und eine anders aufgebaute Deckplatte mit einander zugewandten Innenflächen gegenüberstehend positioniert werden und
- der Zwischenraum zwischen den Deckplatten mit aushärtendem Kunststoff ausgeschäumt wird.

8. Verfahren nach Anspruch 7, **dadurch gekennzeichnet, daß** als Klebstoff ein Zweikomponentenklebstoff eingesetzt wird.

## Claims

1. Wall element for a vehicle body having a core (Sk) of solid foamed material, having covering panels (WI, WA) which bound the core (Sk) on both sides and of which one or both are divided into a plurality of panel segments (PS1, PS2) which are adjacent to one another along abutting edges, the borders of the panel segments (PS1, PS2) being angled inwards at the abutting edges, and the angled sections (PR) of adjacent panel segments (PS1, PS2) butting against one another, and having clasp profiles (SP) which have a hollow web (HS) which engages around angled sections (PR) butting against one another, **characterized in that** the clasp profiles (SP) have side lugs (SF) which protrude from the hollow web (HS) in a plane parallel to the surface of the covering panel, **in that** the clasp profiles (SP) are bonded along the abutting edges lying on the inside to the angled sections (PR) of the panel segments (PS1, PS2) via the hollow web (HS) and are bonded to the inner plane surfaces (OI) of the panel segments (PS1, PS2) via the side lugs (SF) and, in addition, the angled borders (PR) butting against one another of adjacent panel segments (PS1, PS2) are bonded to one another.

2. Wall element according to Claim 1, **characterized in that** the side lugs (SF) have sections (SI) which are curved away from the inner plane surface (OI) of the panel segments (PS1, PS2), in particular in the form of beads.

3. Wall element according to Claim 2, **characterized in that** the depth of the sections (SI) which are curved away lies between 0.05 and 5 mm, in particular between 0.1 mm and 2 mm.

4. Wall element according to Claim 2 or 3, **characterized in that** the space between the sections (SI) which are curved away and the inner plane surfaces (IO) of the panel segments (PS1, PS2) contains adhesive.

5. Wall element according to one of Claims 1 to 4, **characterized in that** the clasp profiles (SP) are bent from sheet metal.

6. Wall element according to one of Claims 1 to 5, **characterized in that** the clasp profiles (SP) consist of a material of higher strength than the panel segments (PS1, PS2).

7. Method for producing a wall element (WE) for a vehicle body, in particular according to Claim 1, in which
- panel segments (PS1, PS2) which have border sections (PR) angled to an inner side from a plane surface, butt against one another by means of the border sections (PR),
- clasp profiles (SP) which have a hollow web (HS) and side lugs (SF) leading away laterally from the latter are placed, with the insertion of bonding material, together with the hollow web (HS) onto the angled sections (PR) butting against one another, and the side lugs (SF) are bonded onto the inner plane surfaces (OI) of the panel segments (PS1, PS2), adhesive additionally being inserted into the hollow web (HS) in such an excess that when the clasp profile (SP) is placed onto the angled border sections (PR) butting against one another, adhesive penetrates into the open butt joint between the border sections (PR),
- covering panels (WA, WI) comprising a plurality of panel segments (PS1, PS2) or a covering panel of this type and a differently constructed covering panel being positioned opposite one another with mutually facing inner surfaces, and
- the intermediate space between the covering panels (WA, WI) being filled with curing plastic.

8. Method according to Claim 7, **characterized in that** a two-component adhesive is used as adhesive.

## Revendications

1. Elément de paroi de carrosserie pour véhicule avec une âme (SK) en mousse solide, avec des plaques de recouvrement (WI, WA) délimitant l'âme (SK) de part et d'autre, dont l'une ou les deux sont divisées en plusieurs segments de plaque (PS1, PS2) jointifs le long d'arêtes de jonction, dans lequel les bords des segments de plaque (PS1, PS2) sont repliés vers l'intérieur sur les arêtes de jonction et les parties repliées (PR) de segments de plaque adjacents (PS1, PS2) sont jointives l'une à l'autre, et avec des profilés en boucle (SP), qui présentent une nervure creuse (HS), qui entoure des parties repliées jointives (PR), **caractérisé en ce que** les profilés en boucle (SP) présentent des ailes latérales (SF) partant de la nervure creuse (HS) dans un plan parallèle à la surface de la plaque de recouvrement, **en ce que** les profilés en boucle (SP) sont collés le long des arêtes de jonction à l'intérieur par la nervure creuse (HS) avec les parties repliées (PR) des segments de plaque (PS1, PS2) et par les ailes latérales (SF) avec les faces planes intérieures (OI) des segments de plaque (PS1, PS2) et en outre les bords repliés jointifs l'un à l'autre (PR) de segments de plaque jointifs (PS1, PS2) sont collés l'un à l'autre.

2. Elément de paroi suivant la revendication 1, **caractérisé en ce que** les ailes latérales (SF) présentent des parties cambrées (SI) s'écartant de la face plane intérieure (OI) des segments de plaque (PS1, PS2), en particulier sous la forme de moulures.

3. Elément de paroi suivant la revendication 2, **caractérisé en ce que** la profondeur des parties cambrées (SI) est située entre 0,05 et 5 mm, en particulier entre 0,1 mm et 2 mm.

4. Elément de paroi suivant la revendication 2 ou 3, **caractérisé en ce que** l'espace entre les parties cambrées (SI) et les faces planes intérieures (OI) des segments de plaque (PS1, PS2) contient un adhésif.

5. Elément de paroi suivant l'une quelconque des revendications 1 à 4, **caractérisé en ce que** les profilés en boucle (SP) sont courbés à partir d'une tôle.

6. Elément de paroi suivant l'une quelconque des revendications 1 à 5, **caractérisé en ce que** les profilés en boucle (SP) sont constitués d'une matière plus résistante que les segments de plaque (PS1, PS2).

7. Procédé pour la fabrication d'un élément de paroi (WE) de carrosserie pour véhicule, en particulier suivant la revendication 1, dans lequel
- des segments de plaque (PS1, PS2), qui présentent des parties de bord (PR) repliées vers un côté intérieur à partir d'une face plane, sont jointifs l'un à l'autre par les parties de bord (PR),
- des profilés en boucle (SP), qui présentent une nervure creuse (HS) et des ailes latérales (SF) partant latéralement de celle-ci, sont engagés sur les parties repliées jointives (PR) avec interaction de matière adhésive avec la nervure creuse (HS) et les ailes latérales (SF) sont collées sur les faces planes intérieures (OI) des segments de plaque (PS1, PS2), un adhésif étant en outre introduit dans la nervure creuse (HS) avec un excédent tel que, lors de l'engagement du profilé en boucle (SP) sur les parties de bord repliées jointives (PR), l'adhésif pénètre dans les joints entre les parties de bord (PR),
- deux plaques de recouvrement (WA, WI) composées de plusieurs segments de plaque (PS1, PS2) ou une telle plaque de recouvrement et une plaque de recouvrement constituée d'une autre manière sont positionnées l'une en face de l'autre avec des faces intérieures tournées l'une vers l'autre, et
- l'espace intermédiaire entre les plaques de recouvrement (WA, WI) est rempli de mousse de matière plastique durcissante.

8. Procédé suivant la revendication 7, **caractérisé en ce que** l'on utilise comme adhésif une colle à deux composants.
